# EUROPEAN PATENT SPECIFICATION

(11) **EP 2 601 807 B1**
(45) Date of publication and mention of the grant of the patent: **23.07.2014**
(21) Application number: 10772988.1
(22) Date of filing: 04.08.2010
(51) Int. Cl.: H04W 36/22, H04W 28/08

(54) **DISTRIBUTED LOAD BALANCING IN CELLULAR WIRELESS NETWORKS**
VERTEILTER LASTAUSGLEICH IN ZELLULAREN MOBILFUNKNETZEN
EQUILIBRAGE DE CHARGE DISTRIBUÉE DANS DES RÉSEAUX CELLULAIRES SANS FIL

(43) Date of publication of application: 12.06.2013
(73) Proprietor: Fujitsu Limited, Kawasaki-shi, Kanagawa 211-8588 (JP)
(72) Inventor: HUNUKUMBURE, Mythri, Hillingdon UB8 3WF (GB)
(74) Representative: Fenlon, Christine Lesley
(86) International application number: PCT/EP2010/061368
(87) International publication number: WO 2012/016590

(56) References cited:
- EP-A1- 1 895 801
- EP-A2- 2 031 922
- WO-A1-2009/138118
- US-A1- 2006 239 230
- US-A1- 2008 057 932
- US-A1- 2009 163 223
- SAMSUNG: "Load balancing among more than two cells", 3GPP DRAFT; R3-101471, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510, 30 April 2010 (2010-04-30), XP050425167, [retrieved on 2010-04-30]
- VELAYOS H ET AL: "Load balancing in overlapping wireless LAN cells", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 7, 20 June 2004 (2004-06-20), pages 3833-3836, XP010712397, DOI: DOI:10.1109/ICC.2004.1313270 ISBN: 978-0-7803-8533-7
- THOMAS CASEY ET AL: "Base Station Controlled Load Balancing with Handovers in Mobile WiMAX", PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371355, ISBN: 978-1-4244-2643-0
- HAO WANG, ZHIWEN PAN, LIANGHUI DING, NAN LIU, PING WU, XIAOHU YOU: "Dynamic Load Balancing and Throughput Optimization in 3GPP LTE Networks", , [Online] 28 June 2010 (2010-06-28), - 2 July 2010 (2010-07-02), pages 939-943, XP002622211, Caen, France Retrieved from the Internet: URL:http://www.signal.uu.se/Publications/p df/c1014.pdf> [retrieved on 2011-02-09]

## Description

The present invention relates to distributed load balancing in cellular wireless networks, in particular, but not exclusively, 3GPP LTE-A networks.

Load balancing is an essential feature of a cellular network, especially when the network load has dynamic variations. With its flat architecture and the x2 interface for inter-eNodeB communications, the LTE (Long Term Evolution) framework provides an opportunity to implement more distributed load balancing algorithms, where the eNodeBs (serving cells or base stations) have greater control on deciding their behaviour. Current discussions on load balancing within the LTE standards are focused on distributed algorithms where neighbouring eNodeBs decide on load balancing behaviour through handovers, without the participation of centralized control apparatus of the network, such as the operations and maintenance centre (OAM). However, as the load balancing requirement may indicate wider network performance issues, it is desirable that the centralized control apparatus is updated on these issues.

According to an embodiment of a first aspect of the present invention there is provided a distributed load balancing method for use in a cell of a cellular wireless network, in which a first parameter of each cell participating in the method is indicative of the operational performance of the cell and has an optimum value and in which a second parameter of each cell participating in the method is indicative of the degree of acceptance by the cell of user transfers to the cell relative to the degree of requests by the cell to transfer users from the cell and has an optimum value, which method comprises a first cell carrying out the steps of: determining, in response to the first cell receiving a request from a second cell of the cellular wireless network to provide service for specified users in the second cell which neighbours the first cell, whether to provide service for the specified users of the second cell by evaluating whether, on the basis of the current load of the first cell, a value of the first parameter of the first cell will be adversely affected if the request of the second cell is accepted and users are transferred from the second cell to the first cell; accepting or declining the request of the second cell in accordance with the result of the determining step; updating the value of the second parameter of the first cell to reflect the result of the determining step; and advising cells neighbouring the first cell and a control means of the cellular wireless network, common to a plurality of cells in the network including the first cell, of the updated value of the second parameter of the first cell.

If it is determined that the value of the said first parameter will be adversely affected, preferably a secondary request is sent by the first cell to cells neighbouring the first cell, which are not neighbours of the second cell, to provide service for specified users of the first cell, and, if the secondary request of the first cell is accepted, the request of the second cell is accepted, the specified users are transferred from the first cell and the second cell, the value of the second parameter of each cell which accepted the secondary request is updated to reflect the acceptance, and cells neighbouring each cell which accepted the secondary request and the control means are advised of that updated value.

Still more preferably, a further secondary request is issued by each of n further cells in the cellular wireless network, a further secondary request issued by the nth cell being a request for another cell to provide service for specified users of the nth cell, where 1≤n≤N, N is a preset maximum number of cells which are permitted to issue such a further secondary request, and the nth cell is neighboured by the (n-1)th cell, except where n is 1 where it is neighboured by the first cell, a further secondary request being issued by the nth cell when, on the basis of the current load of the nth cell, the value of the first parameter of the nth cell will be adversely affected by accepting a further secondary request from the (n-1)th cell, except when n is 1 in which case a further secondary request is issued by the nth cell when, on the basis of the current load of the nth cell, the value of the first parameter of the nth cell will be adversely affected by accepting the secondary request of the first cell, wherein, if the further secondary request of the nth cell is accepted: the received request of the (n-1)th cell is accepted and the specified users are transferred from the (n-1)th cell and the nth cell, except where n is 1 in which case the received request of the first cell is accepted and the specified users are transferred from the first cell and the nth cell; the value of the second parameter of the (n+1)th cell, which accepted the secondary request, is updated to reflect the acceptance; and cells neighbouring the (n+1)th cell and the control means are advised of that updated second parameter value.

The value of the first parameter of a cell which accepts a request to provide service for specified users of another cell may be updated and the control means may be advised of that updated value of the first parameter.

If the secondary request of the first cell is not accepted, whether to accept the request received by the first cell may be determined by calculating what changes in the values of said first and second parameters of the first cell would be caused by accepting the request received by the first cell, and the decision to accept or decline the received request may be made on the basis of a comparison using the changed values for the first and second parameters of the first cell. In order to make the decision to accept or decline the received request on the basis of the comparison, the proximity of the changed value of the second parameter to a preselected value for the second parameter and the proximity of the changed value of the first parameter to a preselected value for the first parameter are determined. The preselected value for the second parameter may be changed in response to a second parameter preselected value adjustment request from the control means.

The optimum value for the second parameter may be changed in response to a second parameter optimum value adjustment request from the control means.

When determining whether to provide service for the specified users of the cell which issued the request, account may be taken of the current value of the second parameter of that cell.

When determining whether to provide service for the specified users of the cell which issued the request, account may be taken of the current value of the second parameter of the cell receiving the request.

The amount of change in the value of the second parameter, of a cell made when a request from another cell to provide service for specified users in said other cell is accepted by said cell, may be dependent upon the value of the second parameter of said other cell which made the request before acceptance of the request.

The value of the second parameter of a cell in the network may be downgraded when it issues a request for another cell to provide service for specified users in the cell, except where this request is in response to a request of a further cell to provide service for users in the said further cell.

The manner in which the value of the second parameter is updated may be changed for a particular result in accordance with a request issued by the control means.

In order to evaluate whether the value of the first parameter will be adversely affected, the change in the value of the first parameter which would be caused by accepting the received request may be calculated, the changed value may be compared with a preselected value for the first parameter, and it may be determined that the value of the first parameter will be adversely affected if the changed value is less than the preselected value, when the optimum value for the first parameter is higher than the preselected value, or if the changed value is more than the preselected value, when the optimum value for the first parameter is lower than the preselected value.

The optimum value for the first parameter may be changed in response to an first parameter optimum value adjustment request from the control means.

The preselected value for the first parameter may be changed in response to a first parameter preselected value adjustment request from the control means.

According to an embodiment of a second aspect of the present invention there is provided apparatus for use in a first cell of a cellular wireless network, in which cellular wireless network a first parameter of a cell is indicative of the operational performance of the cell and has an optimum value and in which cellular wireless network a second parameter of a cell is indicative of the degree of acceptance by the cell of user transfers to the cell relative to the degree of requests by the cell to transfer users from the cell and has an optimum value, which apparatus comprises: request receiving means configured to receive, from a second cell of the cellular wireless network which neighbours the first cell, a request to provide service for specified users in the second cell; determining means configured to determine whether to provide service for the specified users of the second cell, which determining means are operable to evaluate whether, on the basis of the current load of the first cell, a value of the first parameter of the first cell will be adversely affected if the request of the second cell is accepted and users are transferred from the second cell to the first cell; response means configured to accept or decline the request of the second cell in accordance with the result of the determining means; updating means configured to update the value of the second parameter of the first cell to reflect the result of the determining means; and advising means configured to advise cells neighbouring the first cell and a control means of the cellular wireless network, common to a plurality of cells in the cellular wireless network including the first cell, of the updated value of the second parameter of the first cell.

Preferably, if the determining means determine that the value of the said first parameter will be adversely affected, the determining means are operable to initiate the transmittal to cells neighbouring the first cell, which are not neighbours of the second cell, of a secondary request to provide service for specified users of the first cell, to agree to the request of the second cell if the secondary request of the first cell is accepted and the specified users are transferred from the first cell, to update the value of the second parameter of each cell which accepted the secondary request to reflect the acceptance, and to advise cells neighbouring each cell which accepted the secondary request and the control means of that updated value.

The updating means may be configured to update the value of the first parameter of a cell which accepts a request to provide service for specified users of another cell and the advising means may be configured to advise the control means of that updated value of the first parameter.

Desirably, if the secondary request of a cell is not accepted, the determining means are operable to determine whether to accept the request received by that cell by calculating what changes in the values of the said first and second parameters would be caused by accepting the received request, and making the decision to accept or decline the received request on the basis of a comparison using the changed values for the first and second parameters. In order to make the decision to accept or decline the received request on the basis of the comparison, the determining means may be operable to determine the proximity of the changed value of the second parameter to a preselected value for the second parameter and to determine the proximity of the changed value of the first parameter to a preselected value for the first parameter. The apparatus may comprise preselected value changing means configured to change the preselected value for the second parameter in response to a second parameter preselected value adjustment request from the control means.

Apparatus embodying the second aspect of the present invention may further comprise optimum value changing means configured to change the optimum value for the second parameter in response to a second parameter optimum value adjustment request from the control means.

When determining whether to provide service for the specified users of the cell which issued the secondary request, the determining means may be operable to take account of the current value of the second parameter of that cell and/or the cell receiving the request.

The updating means may be configured to change the manner in which the value of the second parameter is updated for a particular result in accordance with a request issued by the control apparatus.

In order to evaluate whether the value of the first parameter will be adversely affected, the determining means may be operable to calculate the change in the value of the first parameter which would be caused by accepting the received request, compare the changed value with a preselected value for the first parameter, and determine that the value of the first parameter will be adversely affected if the changed value is less than the preselected value, if the optimum value for the first parameter is higher than the preselected value, or if the changed value is more than the preselected value, if the optimum value for the first parameter is lower than the preselected value. The apparatus may further comprise preselected value changing means configured to change the preselected value for the first parameter in response to a first parameter preselected value adjustment request from the control means.

The apparatus may further comprise optimum value changing means configured to change the optimum value for the first parameter in response to an first parameter optimum value adjustment request from the control means.

According to an embodiment of a third aspect of the present invention there is provided a communication system comprising a cellular wireless network having a plurality of cells which neighbour one another, in which cells a first parameter of a cell is indicative of the operational performance of the cell and has an optimum value and in which cells a second parameter of a cell is indicative of the degree of acceptance by the cell of user transfers to the cell relative to the degree of requests by the cell to transfer users from the cell and has an optimum value, wherein each of the neighbouring cells is provided with an apparatus embodying the second aspect of the present invention.

The system may be configured such that each of n cells in the network is configured to issue a further secondary request, a further secondary request issued by the nth cell being a request for another cell to provide service for specified users of the nth cell, where 1≤n≤N, N is a preset maximum number of cells which are permitted to issue such a further secondary request, and the nth cell is neighboured by the (n-1)th cell, except where n is 1 where it is neighboured by the first cell, the nth cell being operable to issue a further secondary request when, on the basis of the current load of the nth cell, the value of the first parameter of the nth cell will be adversely affected by accepting a further secondary request from the (n-1)th cell, except when n is 1 in which case the nth cell is operable to issue a further secondary request when, on the basis of the current load of the nth cell, the value of the first parameter of the nth cell will be adversely affected by accepting the secondary request of the first cell, wherein, if the further secondary request of the nth cell is accepted: the nth cell is operable to accept the received request of the (n-1)th cell, to receive the specified users from the (n-1)th cell and to transfer its specified users to an (n+1)th cell, except where n is 1 in which case the received request of the first cell is accepted and the specified users are transferred from the first cell and the nth cell; and the (n+1)th cell, which accepted the secondary request, is operable to update the value of its second parameter to reflect the acceptance and to advise cells neighbouring the (n+1)th cell and the control means of that updated second parameter value.

According to an embodiment of a fourth aspect of the present invention there is provided a computer program which, when executed on a computer, causes that computer to implement the means of an apparatus embodying the second aspect of the present invention, or causes that computer to provide a cell part of a system embodying the third aspect of the present invention, or causes that computer to carry out the steps of a method embodying the first aspect of the present invention.

Distributed load balancing in wireless networks is known, for example, from US2009040989 A1, US2009274129 A1, WO2009/138118A1 and EP1895801A1.

US2009040989 A1 describes different network topologies which can compromise between extreme delay and extreme throughput to provide the desired performance. Different network topologies are compared to the 'star' network formation. The nodes have a mesh connectivity so they can route the load avoiding congested nodes. Load balancing comes from this situation-aware behaviour. In contrast, embodiments of the present invention relate to a cellular wireless network topology where the nodes have limited options to transfer their excessive load and also limited knowledge of the other nodes' dynamic load conditions, and communication amongst neighbouring nodes is employed for load balancing.

US2009274129 A1 discusses methods for switching clients (users) away from the currently serving node to other potential nodes for the purpose of load balancing. The switch is initiated by the client and the nodes provide the parameters to enable switching. These parameters include reducing the received power from the current serving node through transmit power reduction, beam-forming, antenna pattern changing etc. The same methods can be used to increase the received power from neighbour nodes to facilitate switching. In contrast, in embodiments of the present invention, the nodes initiate the switching of users for load balancing and decision making by the neighbouring nodes on accepting the additional load is employed.

WO2009/138118A1 discloses a method in which, upon receipt through a first set of communication resources of a service request from a user, redirection of the service request to a second set of communication resources is attempted. EP1895801A1 discloses performing load balancing among cells of a cellular network in which a request to offload users is made by an overloaded cell to an under-loaded cell.

As compared to a centralized load-balancing mechanism, embodiments of the present invention reduce the need for a highly-available, process-intensive load balancing unit at the control apparatus. In addition, the possibility of a 'single point of failure', associated with a centralized control apparatus-based algorithm, can be avoided.

In an example, the centralized control apparatus of the network, such as the OAM, monitors values of the first and second parameters of the cells (eNodeBs) and influences the cell (eNodeB) behaviour. Thus, as compared with current specifications in LTE for distributed load balancing, the centralized control apparatus (for example the OAM) can observe the behaviour of the network, detect developing problems such as under-serving of a capacity hotspot (i.e. an area where communication traffic is relatively high) and take remedial action through changing scoring strategies. If required, such issues can also be reported to a higher level part of the network for long term solutions.

Current LTE specifications allow load balancing only between two neighbouring cells. In an embodiment of the present invention, however, if an eNodeB cannot accommodate a load balancing request received from a neighbouring eNodeB, it can issue its own request to offload some of its active users and, if this is successful, it can accept the original request. This feature helps to balance the load over a wider region than the two neighbouring cells currently allowed by the LTE specifications. Furthermore, the control apparatus can learn from past events how best to set the scoring strategy in certain scenarios.

Reference will now be made, by way of example, to the accompanying drawings, in which:
Figure 1 illustrates part of a cellular wireless network;
Figure 2 shows a block diagram representing apparatus embodying the second aspect of the present invention;
Figure 3 illustrates a first method embodying the first aspect of the present invention;
Figure 4 illustrates a second method embodying the first aspect of the present invention;
Figure 5 shows a block diagram representing control apparatus;
Figure 6 illustrates architecture agreed in RAN3 as the basis for load balancing; and
Figure 7 illustrates another load balancing method.

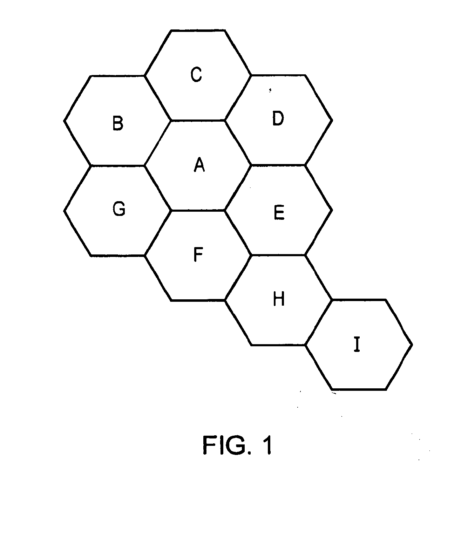

Methods and apparatus embodying the present invention concentrate on active users at the cell edge, who are linked to a single cell (serving eNodeB) but are capable of linking up with other cells (eNodeBs) in the network. These other cells (eNodeBs) are in the neighbour lists of the active users. Figure 1 illustrates part of a cellular wireless network having a cell A, neighbouring cells B to G, another cell H which neighbours cells E and F, and a further cell I which neighbours cell H.

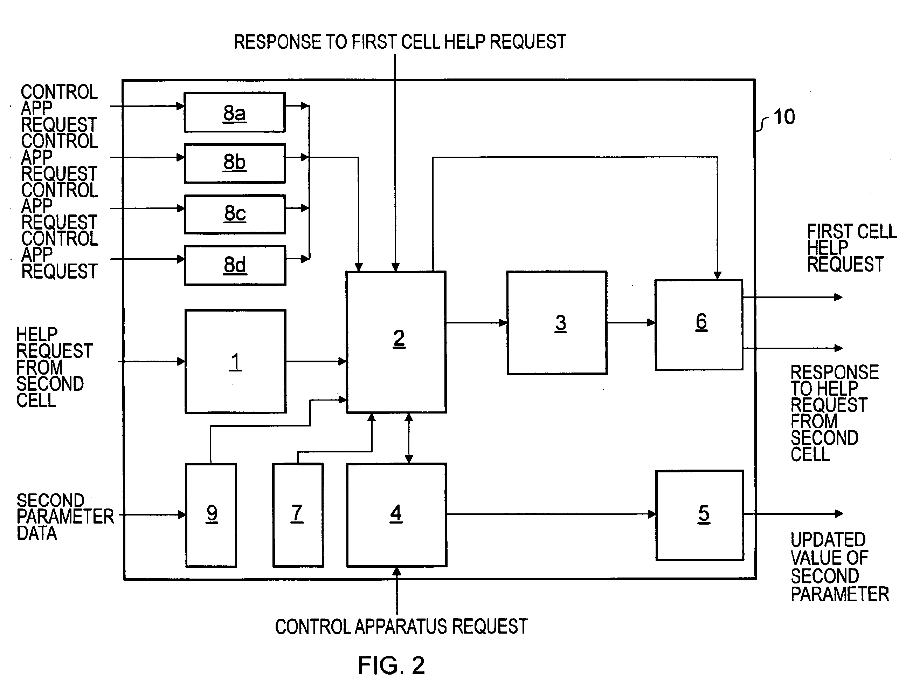

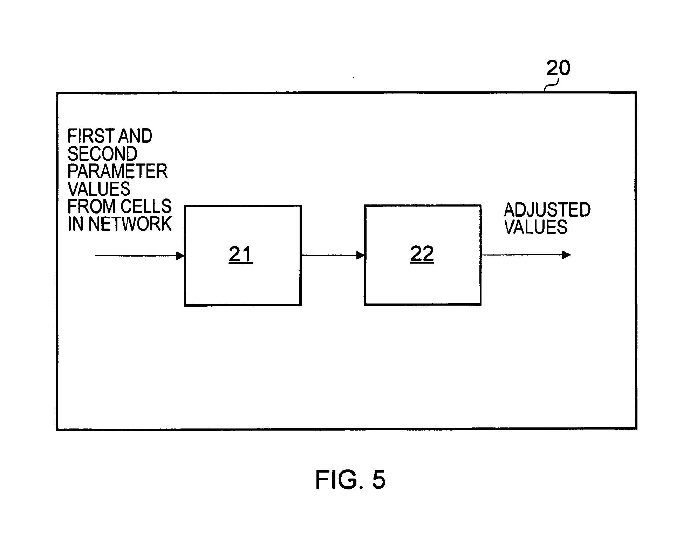

In an embodiment of one aspect of the present invention, a first parameter of a cell in the network is indicative of the operational performance of the cell and has an optimum value and a second parameter of the cell is indicative of the degree of acceptance by the cell of user transfers to the cell relative to the degree of requests by the cell to transfer users from the cell and has an optimum value. As shown in Figure 2, each cell is provided with apparatus 10 comprising request receiving means 1 configured to receive, from another cell of the cellular wireless network which neighbours the first cell, a request to provide service for specified users in the second cell. The apparatus 10 also comprises determining means 2 configured to determine whether to provide service for the specified users of the second cell. The determining means 2 are connected to first parameter calculating means 7 and are operable to evaluate whether, on the basis of the cell's current load, a value of the first parameter of the first cell will be adversely affected if the request of the second cell is accepted and users are transferred from the second cell to the first cell. In order to evaluate whether the value of the first parameter will be adversely affected, the determining means 2 are preferably operable to calculate the change in the value of the first parameter which would be caused by accepting the request of the second cell, compare the changed value with a preselected value for the first parameter, and determine that the value of the first parameter will be adversely affected if the changed value is less than the preselected value, if the optimum value for the first parameter is higher than the preselected value, or if the changed value is more than the preselected value, if the optimum value for the first parameter is lower than the preselected value. Response means 3 are provided for accepting or declining the request of the second cell in accordance with the result of the determining means 2 via transmitting means 6. Updating means 4 of the apparatus 10 are configured to update the value of the second parameter to reflect the result of the determining means 2. The updating means 4 are configured to change the manner in which the value of the second parameter is updated for a particular result in accordance with a request issued by the control apparatus 20, as will be described in more detail later. Advising means 5 of the apparatus 10 are configured to advise cells neighbouring the first cell and a control means 20 (see Figure 5) of the network, common to a plurality of cells in the network including the first cell, of the updated value of the second parameter.

Thus, using the cells A and F as examples, the cell F is operable to determine, in response to the cell F receiving a request to provide service for specified users in the neighbouring cell A, whether to provide service for the specified users of cell A by evaluating whether, on the basis of the cell's current load, a value of the first parameter will be adversely affected if the request of cell A is accepted and users are transferred from cell A to cell F. Cell F accepts or declines the request of cell A in accordance with the result of the determination, updates the value of the second parameter to reflect the result of the determination, and advises cells neighbouring cell F and a control means 20 of the network, common to a plurality of cells in the network including the first cell, of the updated value of the second parameter.

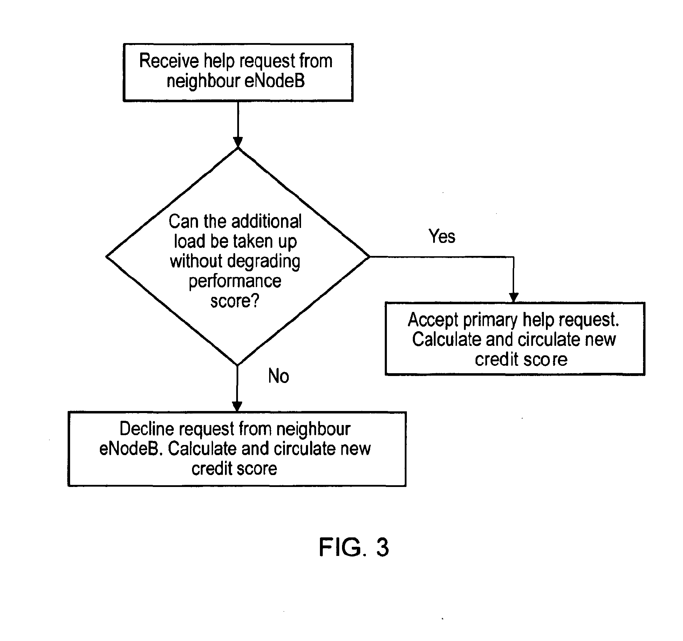

A schematic flow chart is shown in Figure 3 to illustrate steps according to an algorithm embodying the present invention. This embodiment of the present invention is based on eNodeBs responding to load balancing requests by optimizing two scores, a performance score (first parameter value) and a credit score (second parameter value).

The performance score may be based on how well the eNodeB is achieving the KPIs (Key Performance indicators) in the cell and is visible only to the relevant eNodeB and OAM (control apparatus). The performance score may be updated by the eNodeB by looking at the key performance indicators (KPI) within the cell. These KPI include network admission rates, call drop rates, latency etc.

The credit score of an eNodeB goes up if the eNodeB decides to accept a load balancing request (a request to offload some of the active cell edge users from a serving eNodeB), hereafter sometimes referred to as a "help" request, and goes down if the eNodeB decides to decline a load balancing request. The credit score of an eNodeB is visible to its neighbouring eNodeBs and the OAM.

Although higher credit/performance scores are described here as being the goal of the eNodeBs, alterative scoring systems, for example such as one in which the goal of the eNodeBs is to achieve lower credit/performance scores, are possible.

An eNodeB can also conditionally accept a load balancing request by sending a secondary request to offload some of its users to one or more neighbouring cells. If it is determined that the value of the said first parameter will be adversely affected if the request of the second cell is accepted, a secondary request is sent to cells neighbouring the first cell, which are not neighbours of the second cell, to provide service for specified users of the first cell, and, if the secondary request of the first cell is accepted, the request of the second cell is accepted and the specified users are transferred from the first cell and the second cell, the value of the second parameter of each cell which accepted the secondary request is updated to reflect the acceptance, and cells neighbouring each cell which accepted the secondary request and the control means are advised of that updated value. For example, if cell F determines that it cannot accept a request from cell A, it issues a secondary request to cells which do not neighbour cell A, such as cell H. If cell H, for example, accepts the secondary request from cell F, cell F accepts the secondary request from cell A, specified users are transferred from cell F to cell H and from cell A to cell F, the values of the second parameter of cells F and H which accepted the secondary requests are updated to reflect the acceptance, and cells neighbouring cells F and H and the control means are advised of that updated value.

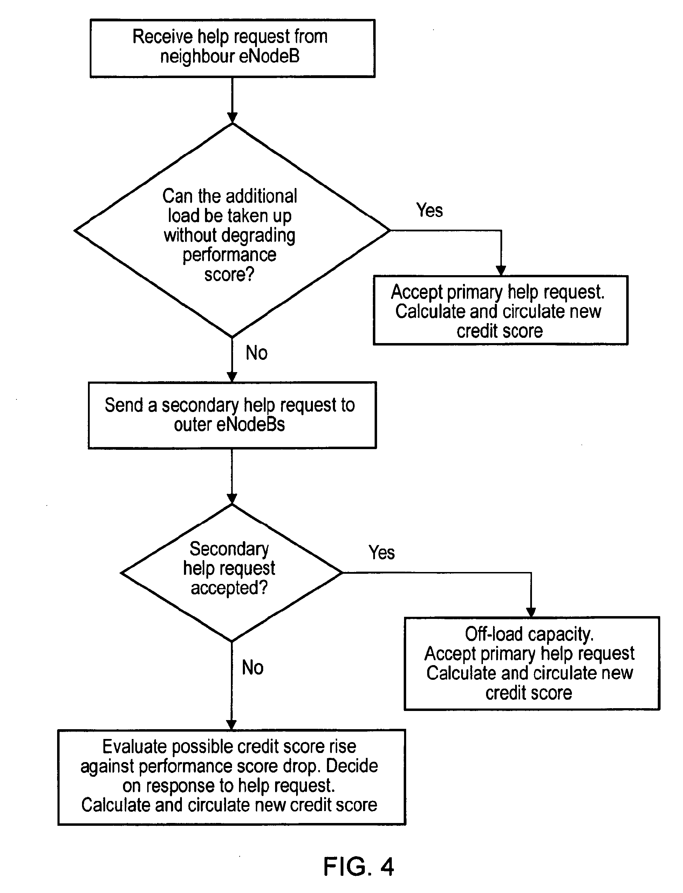

If the request of the first cell is not accepted, whether to accept the request of the second cell is determined by calculating what changes in the values of the said first and second parameters would be caused by accepting the request of the second cell, and the decision to accept or decline the request of the second cell is made on the basis of a comparison using the changed values for the first and second parameters. A second schematic flow chart is shown in Figure 4 to illustrate steps according to this embodiment of the present invention. By way of example, in order to make the decision to accept or decline the request of the second cell on the basis of the comparison, the proximity of the changed value of the second parameter to a preselected value for the second parameter and the proximity of the changed value of the first parameter to the preselected value for the first parameter may be determined.

The load balancing request (primary load balancing request) issued by the second cell can be propagated further outwards through the network, according to the load on the cells. For example, the request can be propagated through a chain of up to N cells, where the maximum number N of cells in the chain may be determined by the system settings. In particular, a further secondary request may be issued by each of n further cells in the network, a further secondary request issued by the nth cell being a request for another cell to provide service for specified users of the nth cell, where 1≤n≤N, N is a preset maximum number of cells which are permitted to issue such a further secondary request, and the nth cell is neighboured by the (n-1)th cell (except where n is 1 where it is neighboured by the first cell). A further secondary request is issued by the nth cell when, on the basis of the current load of the nth cell, the value of the first parameter of the nth cell will be adversely affected by accepting a further secondary request from the (n-1)th cell (except when n is 1 in which case a further secondary request is issued by the nth cell when, on the basis of the current load of the nth cell, the value of the first parameter of the nth cell will be adversely affected by accepting the secondary request of the first cell). If the further secondary request of the nth cell is accepted, the received request of the (n-1)th cell is accepted and the specified users are transferred from the (n-1)th cell and the nth cell (except where n is 1 in which case the received request of the first cell is accepted and the specified users are transferred from the first cell and the nth cell), the value of the second parameter of the (n+1)th cell, which accepted the secondary request, is updated to reflect the acceptance, and cells neighbouring the (n+1)th cell and the control means are advised of that updated second parameter value. Thus, each cell receiving a help request carries out the steps shown in Figure 4. For example, a secondary request received by cell H may prompt the issuance by cell H of a further secondary request to neighbouring cell I, and so on.

As explained in more detail below, the OAM can influence the behaviour of eNodeBs by changing the scoring strategies of the eNodeBs concerned. Thus, an eNodeB can make an autonomous decision to accept, conditionally accept or reject a load balancing request, while the OAM observes the variations of the two scores of the eNodeBs and influences the behaviour of the eNodeBs only when required.

The amount of change in the value of the second parameter of the first cell made when a request from a second cell is accepted may be dependent upon the value of the second parameter of the second cell before acceptance of the request. In this case the apparatus 10 may comprise storage means 9 for storing the current values of the second parameter of the other cells in the network. Preferably the configuration is such that if an eNodeB assists a neighbouring eNodeB with a higher credit score, the credit score of the eNodeB providing assistance increases by a higher amount than it would if the credit score of the eNodeB being assisted were lower. Conversely, the configuration is preferably such that if an eNodeB assists a neighbouring eNodeB with a lower credit score, the credit score of the eNodeB providing assistance increases by a lower amount than it would if the credit score of the eNodeB being assisted were higher. Thus, when determining whether to provide service for the specified users of the second cell, account may be taken of the current value of the second parameter of the second cell and/or the first cell. Accordingly, an eNodeB is more likely to assist eNodeBs with higher credit scores and to try to maintain its credit score at a higher level, so when it sends out a help request it is more likely to get assistance.

The value of the second parameter of a cell in the network may be downgraded when it issues a request for another cell to provide service for specified users in the cell, except where this request is in response to a request of a further cell to provide service for users in the further cell. In particular, in order to deter the eNodeBs from sending out frequent help requests as a first course of action, sending out a help request preferably causes the credit score of the sending eNodeB to be decreased by a certain margin. An exception to this is when an eNodeB conditionally accepts a help request and sends a request to its neighbouring eNodeBs to offload some of its own capacity, so it can accommodate the original help request without degrading its service. This kind of behaviour helps to ease service demands in a capacity hotspot, by propagating help requests to cells outwards from the hotspot.

Figure 5 illustrates control apparatus 20 for use in a cellular wireless network, such as the one described with reference to Figure 1. The control apparatus 20 comprises monitoring means 21 configured to monitor the values of the first and second parameters of cells in the cellular wireless network. In this case, the updating means 4 of the apparatus 10 are configured to update the value of the first parameter if the request of the second cell is accepted, and the advising means 5 of the apparatus 10 are also configured to advise cells neighbouring the first cell and the control means of the updated value of the first parameter. The control apparatus 20 also comprises adjustment means 22 configured to adjust the amount of change in the value of the second parameter, which is to be imposed upon updating of the second parameter, of a designated one of the cells on the basis of one or more of the monitored values in accordance with an objective to be achieved. For example, in some cases when the eNodeB opts to assist a neighbour eNodeB, it may have to degrade the service quality to its users, which will degrade its performance score. The control apparatus (OAM) looks at both the performance score and credit score of an eNodeB and acts to rectify certain tendencies. If a certain eNodeB maintains a high credit score and a low performance score, it indicates that this eNodeB is helping others at the cost of its own performance. The OAM can then change the scoring strategy for this eNodeB, for example by instructing that only a minimal change or no change in credit score is made for assisting others or seeking assistance.

It may also be desirable for the adjustment means 22 to be configured to adjust the optimum value for the first parameter and/or the optimum value for the second parameter and/or the preselected value for the first parameter and/or the preselected value for the second parameter of a designated one of the cells in accordance with an objective to be achieved. In this case the apparatus 10 preferably comprises first and second preselected value changing means 8a, 8b, configured to change the preselected value for the first and second parameters in response to respective first parameter preselected value and second parameter preselected value adjustment requests from the control means 20, and first and second optimum value changing means 8c, 8d configured to change the optimum value for the first and second parameters in response to respective first parameter optimum value and second parameter optimum value adjustment requests from the control means 20. Preferably, the configuration of the adjustment means 22 is such that past events are taken into account when an adjustment is made.

By observing the behaviour of the eNodeBs through the changes in credit score and performance score updates and changing the scoring strategies where desirable, the OAM can adapt the behaviour of eNodeBs to suit dynamic traffic demands. For example, if a certain region (for example the city centre) experiences high traffic demand at certain times (for example during the lunch hour) the OAM can influence the neighbour eNodeBs to assist the eNodeB in this region more than usual, using its experience of similar or related past events to determine how best to set the scoring strategies to influence the eNodeB behaviour in the desired manner.

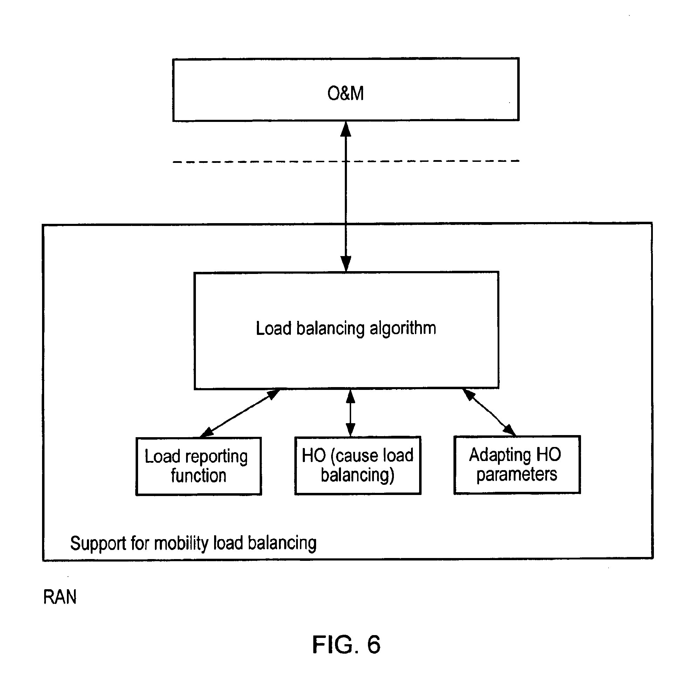

It should be mentioned that in November 2009, as part of release 9 features, LTE RAN3 has agreed a new cause value 'load balancing' as a reason to initiate handover communication between two eNodeB's. Hence, an algorithm embodying the present invention is feasible within the LTE (Advanced) context. The architecture shown in Figure 6 has been agreed in LTE RAN3 as the basis for load balancing.

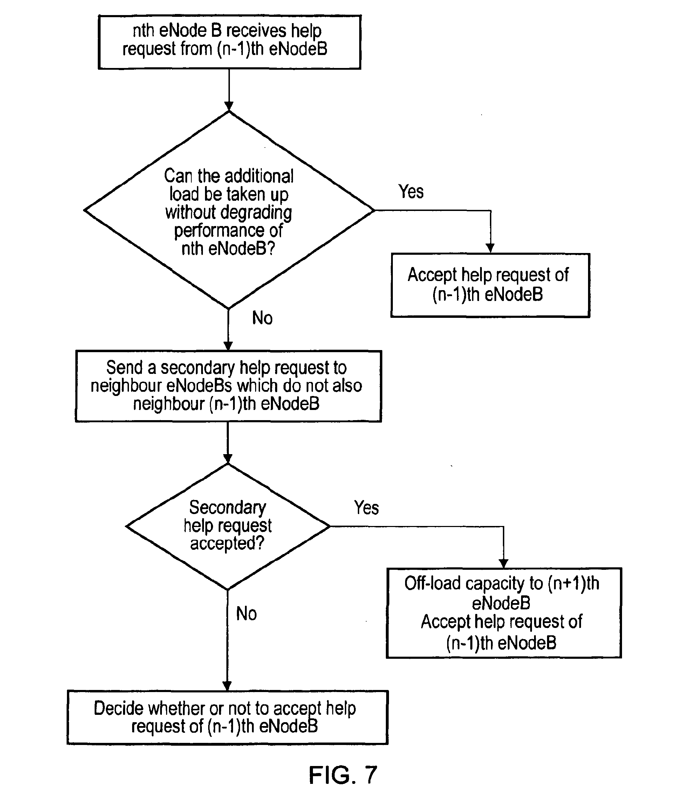

The current LTE standard specifies issuing user handover requests based on the current load of a single tier of neighbour eNodeBs. A load balancing method, which does not embody the present invention, is envisaged in which secondary requests based only on the performance of the cells, as indicated by the current load, are made by up to N cells in a chain, where the maximum number N of cells in the chain may be determined by the system settings. In particular, in such a method a first secondary request for another cell to provide service for specified users of a first cell is issued when the first cell, which has received a primary request issued by a second cell of the network for another cell in the network to provide service for specified users of the second cell, is unable, on the basis of its current load, to accept the primary request without adversely affecting its operational performance, wherein a further secondary request is issued by each of n further cells in the network, a further secondary request issued by the nth cell being a request for another cell to provide service for specified users of the nth cell, where 1≤n≤N, N is a preset maximum number of cells which are permitted to issue such a further secondary request, and the nth cell is neighboured by the (n-1)th cell (except where n is 1 where it is neighboured by the first cell). A further secondary request is issued by the nth cell when the operational performance of the nth cell will be adversely affected by accepting a further secondary request from the (n-1)th cell (except when n is 1 in which case a further secondary request is issued by the nth cell when the operational performance of the nth cell will be adversely affected by accepting the secondary request of the first cell). If the further secondary request of the nth cell is accepted, the received request of the (n-1)th cell is accepted and the specified users are transferred from the (n-1)th cell and the nth cell (except where n is 1 in which case the received request of the first cell is accepted and the specified users are transferred from the first cell and the nth cell). A schematic flow chart is shown in Figure 7 to illustrate steps according to this embodiment of the present invention. For example, cell F may be prompted to issue a secondary request in order to accept a request received from cell A, cell H may be prompted to issue a further secondary request in order to accept a request received from cell F, cell I may be prompted to issue a further secondary request in order to accept a request received from cell H, and so on down a chain of cells, up to the maximum number allowable.

The method described above may be modified such that whether or not the operational performance of the first cell is deemed to be adversely affected by a decision to accept the secondary request of the second cell is determined by considering the affect of that decision on a first parameter of the first cell, which first parameter is indicative of the operational performance of the first cell and has an optimum value. As mentioned previously, the first parameter may be a performance score based on how well the eNodeB is achieving the KPIs (Key Performance Indicators) in the cell and may be visible only to the relevant eNodeB and OAM (control apparatus). The performance score may be updated by the eNodeB by looking at the key performance indicators (KPI) within the cell. These KPI include network admission rates, call drop rates, latency etc. The value of the first parameter of the first cell may be updated when a request to provide service for specified users of the second cell has been accepted and control means of the network, common to a plurality of cells in the network including the first cell, may be advised of that updated value of the first parameter.

The method may be further modified such that the value of a second parameter of the first cell, which is indicative of the degree of acceptance by the first cell of user transfers to the cell relative to the degree of requests by the cell to transfer users from the cell and has an optimum value, is also updated on the basis of whether or not the request of the second cell has been accepted and cells neighbouring the first cell and the control means of the network are advised of the updated value of the second parameter. As mentioned above, the second parameter of an eNodeB may be a credit score which goes up if the eNodeB decides to accept a load balancing request, and goes down if the eNodeB decides to decline a load balancing request. The credit score of an eNodeB is visible to its neighbouring eNodeBs and the OAM.

As mentioned previously, although higher credit/performance scores are described here as being the goal of the eNodeBs, alterative scoring systems, for example such as one in which the goal of the eNodeBs is to achieve lower credit/performance scores, are possible.

Various aspects of the present invention have been described with reference to networks in accordance with 3GPP LTE-A, but embodiments of the present invention may be applied to arrangements other than those described here.

In addition, although described separately, each of the different aspects of the invention may be combined with any other aspect, as appropriate.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

## Claims

1. A distributed load balancing method for use in a cell of a cellular wireless network, in which a first parameter of each cell participating in the method is indicative of the operational performance of the cell and has an optimum value and in which a second parameter of each cell participating in the method is indicative of the degree of acceptance by the cell of user transfers to the cell relative to the degree of requests by the cell to transfer users from the cell and has an optimum value, which method comprises a first cell carrying out the steps of:
determining, in response to the first cell receiving from a second cell of the cellular wireless network a request to provide service for specified users in the second cell which neighbours the first cell, whether to provide service for the specified users of the second cell by evaluating whether, on the basis of the current load of the first cell, a value of the first parameter of the first cell will be adversely affected if the request of the second cell is accepted and users are transferred from the second cell to the first cell;
accepting or declining the request of the second cell in accordance with the result of the determining step;
updating the value of the second parameter of the first cell to reflect the result of the determining step; and
advising cells neighbouring the first cell and a control means (20) of the cellular wireless network, common to a plurality of cells in the network including the first cell, of the updated value of the second parameter of the first cell.

2. A method as claimed in claim 1, wherein, if it is determined that the value of the said first parameter will be adversely affected, a secondary request is sent by the first cell to cells neighbouring the first cell, which are not neighbours of the second cell, to provide service for specified users of the first cell, and, if the secondary request of the first cell is accepted, the request of the second cell is accepted, the specified users are transferred from the first cell and the second cell, the value of the second parameter of each cell which accepted the secondary request is updated to reflect the acceptance, and cells neighbouring each cell which accepted the secondary request and the control means are advised of that updated value.

3. A method as claimed in claim 2, wherein a further secondary request is issued by each of n further cells in the cellular wireless network, a further secondary request issued by the nth cell being a request for another cell to provide service for specified users of the nth cell, where 1≤n≤N, N is a preset maximum number of cells which are permitted to issue such a further secondary request, and the nth cell is neighboured by the (n-1)th cell, except where n is 1 where it is neighboured by the first cell,
a further secondary request being issued by the nth cell when, on the basis of the current load of the nth cell, the value of the first parameter of the nth cell will be adversely affected by accepting a further secondary request from the (n-1)th cell, except when n is 1 in which case a further secondary request is issued by the nth cell when, on the basis of the current load of the nth cell, the value of the first parameter of the nth cell will be adversely affected by accepting the secondary request of the first cell, wherein, if the further secondary request of the nth cell is accepted:
the received request of the (n-1)th cell is accepted and the specified users are transferred from the (n-1)th cell and the nth cell, except where n is 1 in which case the received request of the first cell is accepted and the specified users are transferred from the first cell and the nth cell;
the value of the second parameter of the (n+1)th cell, which accepted the further secondary request, is updated to reflect the acceptance; and
cells neighbouring the (n+1)th cell and the control means (20) are advised of that updated second parameter value.

4. A method as claimed in claim 1, 2 or 3, further comprising updating the value of the first parameter of a cell in the cellular wireless network which accepts a request to provide service for specified users of another cell and advising the control means (20) of that updated value of the first parameter.

5. A method as claimed in claim 2 or 3, or claim 4 when read as appended to claim 2 or 3, wherein, if the secondary request of the first cell is not accepted, whether to accept the request received by the first cell is determined by calculating what changes in the values of said first and second parameters of the first cell would be caused by accepting the request received by the first cell, and the decision to accept or decline the request received by the first cell is made on the basis of a comparison using the changed values for the first and second parameters of the first cell.

6. A method as claimed in claim 5, wherein, in order to make the decision to accept or decline the request received by the first cell on the basis of the comparison, the proximity of the changed value of the second parameter to a preselected value for the second parameter and the proximity of the changed value of the first parameter to a preselected value for the first parameter are determined.

7. A method as claimed in any preceding claim, wherein, when determining whether to provide service for the specified users of the second cell which issued the request, account is taken of the current value of the second parameter of that second cell.

8. A method as claimed in any preceding claim, wherein, when determining whether to provide service for the specified users of the second cell which issued the request, account is taken of the current value of the second parameter of the first cell receiving the request.

9. A method as claimed in any preceding claim, wherein the amount of change in the value of the second parameter, of a cell in the cellular wireless network said made when a request from another cell to provide service for specified users in said other cell is accepted by cell, is dependent upon the value of the second parameter of said other cell which made the request before acceptance of the request.

10. A method as claimed in any preceding claim, wherein the value of the second parameter of a cell in the cellular wireless network is downgraded when it issues a request for another cell to provide service for specified users in the cell, except where this request is in response to a request of a further cell to provide service in the cell for users in said further cell.

11. A method as claimed in any preceding claim, further comprising changing the manner in which the value of the second parameter is updated for a particular result of the determining step in accordance with a request issued by the control means.

12. A method as claimed in any preceding claim, wherein, in order to evaluate whether the value of the first parameter will be adversely affected, the change in the value of the first parameter which would be caused by accepting the received request is calculated, the changed value is compared with a preselected value for the first parameter, and it is determined that the value of the first parameter will be adversely affected if the changed value is less than the preselected value, when the optimum value for the first parameter is higher than the preselected value, or if the changed value is more than the preselected value, when the optimum value for the first parameter is lower than the preselected value.

13. Apparatus (10) for use in a first cell of a cellular wireless network, in which cellular wireless network a first parameter of a cell is indicative of the operational performance of the cell and has an optimum value and in which cellular wireless network a second parameter of a cell is indicative of the degree of acceptance by the cell of user transfers to the cell relative to the degree of requests by the cell to transfer users from the cell and has an optimum value, which apparatus (10) comprises:
request receiving means (1) configured to receive, from a second cell of the cellular wireless network which neighbours the first cell, a request to provide service for specified users in the second cell;
determining means (2) configured to determine whether to provide service for the specified users of the second cell, which determining means (2) are operable to evaluate whether, on the basis of the current load of the first cell, a value of the first parameter of the first cell will be adversely affected if the request of the second cell is accepted and users are transferred from the second cell to the first cell;
response means (3) configured to accept or decline the request of the second cell in accordance with the result of the determining means (2);
updating means (4) configured to update the value of the second parameter of the first cell to reflect the result of the determining means (2); and
advising means (5) configured to advise cells neighbouring the first cell and a control means (20) of the cellular wireless network, common to a plurality of cells in the cellular wireless network including the first cell, of the updated value of the second parameter of the first cell.

14. A communication system comprising a cellular wireless network having a plurality of cells which neighbour one another, in which cells a first parameter of a cell is indicative of the operational performance of the cell and has an optimum value and in which cells a second parameter of a cell is indicative of the degree of acceptance by the cell of user transfers to the cell relative to the degree of requests by the cell to transfer users from the cell and has an optimum value, wherein each of the neighbouring cells is provided with an apparatus (10) as claimed in claim 13.

15. A computer program which, when executed on a computer, causes that computer to implement the means of an apparatus (10) as claimed in claim 13, or causes that computer to provide a cell part of a system as claimed in claim 14, or causes that computer to carry out the steps of a method as claimed in any one of claims 1 to 12.

## Patentansprüche

1. Verfahren zum verteilten Lastausgleich zur Anwendung in einer Zelle eines zellularen Mobilfunknetzes, wobei ein erster Parameter jeder an dem Verfahren teilnehmenden Zelle hinsichtlich der Leistungsfähigkeit der Zelle indikativ ist und einen optimalen Wert hat, und wobei ein zweiter Parameter jeder an dem Verfahren teilnehmenden Zelle hinsichtlich des Grades der Annahme von Teilnehmerübergaben zu der Zelle durch die Zelle im Verhältnis zu dem Grad von Anforderungen durch die Zelle, Teilnehmer von der Zelle zu übergeben, indikativ ist und einen optimalen Wert hat, wobei das Verfahren umfasst, dass eine erste Zelle die folgenden Schritte ausführt:
Bestimmen, in Reaktion darauf, dass die erste Zelle eine Anforderung von einer zweiten Zelle des zellularen Mobilfunknetzes empfängt, für spezifizierte Teilnehmer in der zweiten Zelle, welche der ersten Zelle benachbart ist, Dienste bereitzustellen, ob Dienste für die spezifizierten Teilnehmer der zweiten Zelle bereitgestellt werden sollen, durch Beurteilen, ob, auf der Basis der aktuellen Last der ersten Zelle, ein Wert des ersten Parameters der ersten Zelle nachteilig beeinflusst wird, falls die Anforderung der zweiten Zelle angenommen wird und Teilnehmer von der zweiten Zelle zu der ersten Zelle übergeben werden;
Annehmen oder Ablehnen der Anforderung der zweiten Zelle entsprechend dem Ergebnis des Bestimmungsschrittes;
Aktualisieren des Wertes des zweiten Parameters der ersten Zelle, so dass er das Ergebnis des Bestimmungsschrittes widerspiegelt; und
Benachrichtigen von Zellen, die der ersten Zelle benachbart sind, und eines Steuerungsmittels (20) des zellularen Mobilfunknetzes, das mehreren Zellen in dem Netz einschließlich der ersten Zelle gemeinsam ist, über den aktualisierten Wert des zweiten Parameters der ersten Zelle.

2. Verfahren nach Anspruch 1, wobei, falls bestimmt wird, dass der Wert des ersten Parameters nachteilig beeinflusst wird, durch die erste Zelle eine sekundäre Anforderung an der ersten Zelle benachbarte Zellen, welche nicht Nachbarn der zweiten Zelle sind, gesendet wird, Dienste für spezifizierte Teilnehmer der ersten Zelle bereitzustellen, und falls die sekundäre Anforderung der ersten Zelle angenommen wird, die Anforderung der zweiten Zelle angenommen wird, die spezifizierten Teilnehmer von der ersten Zelle und der zweiten Zelle übergeben werden, der Wert des zweiten Parameters jeder Zelle, welche die sekundäre Anforderung angenommen hat, aktualisiert wird, so dass er die Annahme widerspiegelt, und benachbarte Zellen jeder Zelle, welche die sekundäre Anforderung angenommen hat, und das Steuerungsmittel über diesen aktualisierten Wert benachrichtigt werden.

3. Verfahren nach Anspruch 2, wobei eine weitere sekundäre Anforderung durch jede von n weiteren Zellen in dem zellularen Mobilfunknetz ausgegeben wird, wobei eine durch die n-te Zelle ausgegebene weitere sekundäre Anforderung eine Anforderung ist, dass eine andere Zelle Dienste für spezifizierte Teilnehmer der n-ten Zelle bereitstellen soll, wobei 1≤n≤N ist, N eine vorgegebene maximale Anzahl von Zellen ist, denen erlaubt ist, eine solche weitere sekundäre Anforderung auszugeben, und der n-ten Zelle die (n-1)-te Zelle benachbart ist, außer wenn n gleich 1 ist, wo ihr die erste Zelle benachbart ist,
wobei eine weitere sekundäre Anforderung durch die n-te Zelle ausgegeben wird, wenn, auf der Basis der aktuellen Last der n-ten Zelle, der Wert des ersten Parameters der n-ten Zelle durch Annehmen einer weiteren sekundären Anforderung von der (n-1)-ten Zelle nachteilig beeinflusst wird, außer wenn n gleich 1 ist, wobei in diesem Falle eine weitere sekundäre Anforderung durch die n-te Zelle ausgegeben wird, wenn, auf der Basis der aktuellen Last der n-ten Zelle, der Wert des ersten Parameters der n-ten Zelle durch Annehmen der sekundären Anforderung der ersten Zelle nachteilig beeinflusst wird, wobei, falls die weitere sekundäre Anforderung der n-ten Zelle angenommen wird:
die empfangene Anforderung der (n-1)-ten Zelle angenommen wird und die spezifizierten Teilnehmer von der (n-1)-ten Zelle und der n-ten Zelle übergeben werden, außer wenn n gleich 1 ist, wobei in diesem Falle die empfangene Anforderung der ersten Zelle angenommen wird und die spezifizierten Teilnehmer von der ersten Zelle und der n-ten Zelle übergeben werden;
der Wert des zweiten Parameters der (n+1)-ten Zelle, welche die weitere sekundäre Anforderung angenommen hat, aktualisiert wird, so dass er die Annahme widerspiegelt; und
Zellen, die der (n+1)-ten Zelle benachbart sind, und das Steuerungsmittel (20) über diesen aktualisierten zweiten Parameterwert benachrichtigt werden.

4. Verfahren nach Anspruch 1, 2 oder 3, welches ferner das Aktualisieren des Wertes des ersten Parameters einer Zelle in dem zellularen Mobilfunknetz, welche eine Anforderung annimmt, Dienste für spezifizierte Teilnehmer einer anderen Zelle bereitzustellen, und das Benachrichtigen des Steuerungsmittels (20) über diesen aktualisierten Wert des ersten Parameters umfasst.

5. Verfahren nach Anspruch 2 oder 3, oder nach Anspruch 4, wenn abhängig von Anspruch 2 oder 3, wobei, falls die sekundäre Anforderung der ersten Zelle nicht angenommen wird, bestimmt wird, ob die durch die erste Zelle empfangene Anforderung angenommen werden soll, indem berechnet wird, welche Änderungen in den Werten des ersten und des zweiten Parameters der ersten Zelle durch Annehmen der durch die erste Zelle empfangenen Anforderung verursacht würden, und die Entscheidung, ob die durch die erste Zelle empfangene Anforderung angenommen oder abgelehnt werden soll, auf der Basis eines Vergleiches unter Verwendung der geänderten Werte für den ersten und den zweiten Parameter der ersten Zelle getroffen wird.

6. Verfahren nach Anspruch 5, wobei, um auf der Basis des Vergleiches die Entscheidung zu treffen, ob die durch die erste Zelle empfangene Anforderung angenommen oder abgelehnt werden soll, die Nähe des geänderten Wertes des zweiten Parameters zu einem vorgewählten Wert für den zweiten Parameter und die Nähe des geänderten Wertes des ersten Parameters zu einem vorgewählten Wert für den ersten Parameter bestimmt werden.

7. Verfahren nach einem der vorhergehenden Ansprüche, wobei, wenn bestimmt wird, ob Dienste für die spezifizierten Teilnehmer der zweiten Zelle, welche die Anforderung ausgegeben hat, bereitgestellt werden sollen, der aktuelle Wert des zweiten Parameters dieser zweiten Zelle berücksichtigt wird.

8. Verfahren nach einem der vorhergehenden Ansprüche, wobei, wenn bestimmt wird, ob Dienste für die spezifizierten Teilnehmer der zweiten Zelle, welche die Anforderung ausgegeben hat, bereitgestellt werden sollen, der aktuelle Wert des zweiten Parameters der ersten Zelle, welche die Anforderung empfängt, berücksichtigt wird.

9. Verfahren nach einem der vorhergehenden Ansprüche, wobei der Betrag der Änderung des Wertes des zweiten Parameters einer Zelle in dem zellularen Mobilfunknetz, die vorgenommen wird, wenn eine Anforderung von einer anderen Zelle, Dienste für spezifizierte Teilnehmer in dieser anderen Zelle bereitzustellen, durch diese Zelle angenommen wird, von dem Wert des zweiten Parameters der anderen Zelle, welche die Anforderung getätigt hat, vor Annahme der Anforderung abhängig ist.

10. Verfahren nach einem der vorhergehenden Ansprüche, wobei der Wert des zweiten Parameters einer Zelle in dem zellularen Mobilfunknetz heruntergesetzt wird, wenn sie eine Anforderung ausgibt, dass eine andere Zelle Dienste für spezifizierte Teilnehmer in der Zelle bereitstellen soll, außer wenn diese Anforderung in Reaktion auf eine Anforderung einer weiteren Zelle erfolgt, in der Zelle Dienste für Teilnehmer in der weiteren Zelle bereitzustellen.

11. Verfahren nach einem der vorhergehenden Ansprüche, welche ferner das Ändern der Art und Weise, wie der Wert des zweiten Parameters für ein bestimmtes Ergebnis des Bestimmungsschritts aktualisiert wird, entsprechend einer durch das Steuerungsmittel ausgegebenen Anforderung umfasst.

12. Verfahren nach einem der vorhergehenden Ansprüche, wobei, um zu beurteilen, ob der Wert des ersten Parameters nachteilig beeinflusst wird, die Änderung des Wertes des ersten Parameters, welche durch Annehmen der ersten Anforderung verursacht würde, berechnet wird, der geänderte Wert mit einem vorgewählten Wert für den ersten Parameter verglichen wird und bestimmt wird, dass der Wert des ersten Parameters nachteilig beeinflusst wird, falls der geänderte Wert kleiner als der vorgewählte Wert ist, wenn der optimale Wert für den ersten Parameter höher als der vorgewählte Wert ist, oder falls der geänderte Wert höher als der vorgewählte Wert ist, wenn der optimale Wert für den ersten Parameter niedriger als der vorgewählte Wert ist.

13. Vorrichtung (10) zur Verwendung in einer ersten Zelle eines zellularen Mobilfunknetzes, wobei in diesem zellularen Mobilfunknetz ein erster Parameter einer Zelle hinsichtlich der Leistungsfähigkeit der Zelle indikativ ist und einen optimalen Wert hat, und wobei in diesem zellularen Mobilfunknetz ein zweiter Parameter einer Zelle hinsichtlich des Grades der Annahme von Teilnehmerübergaben zu der Zelle durch die Zelle im Verhältnis zu dem Grad von Anforderungen durch die Zelle, Teilnehmer von der Zelle zu übergeben, indikativ ist und einen optimalen Wert hat, wobei die Vorrichtung (10) umfasst:
Anforderungsempfangsmittel (1), die dafür ausgelegt sind, von einer zweiten Zelle des zellularen Mobilfunknetzes, welche der ersten Zelle benachbart ist, für spezifizierte Teilnehmer in der zweiten Zelle Dienste bereitzustellen;
Bestimmungsmittel (2), die dafür ausgelegt sind zu bestimmen, ob Dienste für die spezifizierten Teilnehmer der zweiten Zelle bereitgestellt werden sollen, wobei diese Bestimmungsmittel (2) dafür ausgebildet sind zu beurteilen, ob, auf der Basis der aktuellen Last der ersten Zelle, ein Wert des ersten Parameters der ersten Zelle nachteilig beeinflusst wird, falls die Anforderung der zweiten Zelle angenommen wird und Teilnehmer von der zweiten Zelle zu der ersten Zelle übergeben werden;
Reaktionsmittel (3), die dafür ausgelegt sind, entsprechend dem Ergebnis der Bestimmungsmittel (2) die Anforderung der zweiten Zelle anzunehmen oder abzulehnen;
Aktualisierungsmittel (4), die dafür ausgelegt sind, den Wert des zweiten Parameters der ersten Zelle zu aktualisieren, so dass er das Ergebnis der Bestimmungsmittel (2) widerspiegelt; und
Benachrichtigungsmittel (5), die dafür ausgelegt sind, Zellen, die der ersten Zelle benachbart sind, und ein Steuerungsmittel (20) des zellularen Mobilfunknetzes, das mehreren Zellen in dem zellularen Mobilfunknetz einschließlich der ersten Zelle gemeinsam ist, über den aktualisierten Wert des zweiten Parameters der ersten Zelle zu benachrichtigen.

14. Kommunikationssystem, welches ein zellulares Mobilfunknetz mit mehreren Zellen umfasst, welche einander benachbart sind, wobei in diesen Zellen ein erster Parameter einer Zelle hinsichtlich der Leistungsfähigkeit der Zelle indikativ ist und einen optimalen Wert hat, und wobei in diesen Zellen ein zweiter Parameter einer Zelle hinsichtlich des Grades der Annahme von Teilnehmerübergaben zu der Zelle durch die Zelle im Verhältnis zu dem Grad von Anforderungen durch die Zelle, Teilnehmer von der Zelle zu übergeben, indikativ ist und einen optimalen Wert hat, wobei jede der einander benachbarten Zellen mit einer Vorrichtung (10) nach Anspruch 13 versehen ist.

15. Computerprogramm, welches, wenn es auf einem Computer ausgeführt wird, bewirkt, dass dieser Computer die Mittel einer Vorrichtung (10) nach Anspruch 13 implementiert, oder bewirkt, dass dieser Computer eine Zelle bereitstellt, die Teil eines Systems nach Anspruch 14 ist, oder bewirkt, dass dieser Computer die Schritte eines Verfahrens nach einem der Ansprüche 1 bis 12 ausführt.

## Revendications

1. Procédé d'équilibrage de charge distribuée utilisé dans une cellule d'un réseau cellulaire sans fil, dans lequel un premier paramètre de chaque cellule participant au procédé indique la performance opérationnelle de la cellule et possède une valeur optimum et dans lequel un second paramètre de chaque cellule participant au procédé indique le degré d'acceptation par la cellule de transferts d'utilisateurs à la cellule par rapport au degré de requêtes par la cellule pour transférer des utilisateurs depuis la cellule et possède une valeur optimum, lequel procédé comporte une première cellule effectuant les étapes consistant à :
déterminer, en réponse à la première cellule recevant depuis une seconde cellule du réseau cellulaire sans fil une requête pour fournir un service à des utilisateurs spécifiés dans la seconde cellule qui est voisine de la première cellule, si oui ou non fournir un service aux utilisateurs spécifiés de la seconde cellule en évaluant si oui ou non, en fonction de la charge présente de la première cellule, une valeur du premier paramètre de la première cellule sera affectée négativement si la requête de la seconde cellule est acceptée et les utilisateurs sont transférés de la seconde cellule à la première cellule ;
accepter ou décliner la requête de la seconde cellule conformément au résultat de l'étape de détermination;
mettre â jour la valeur du second paramètre de la première cellule pour réfléchir le résultat de 11 étampe de détermination ; et
informer les cellules adjacentes à la première cellule et un moyen de contrôle (20) du réseau cellulaire sans fil, commun à une pluralité de cellules dans le réseau comprenant la première cellule, de la valeur mise à jour du second paramètre de la première cellule.

2. Procédé selon la revendication 1, dans lequel, s'il est déterminé que la valeur dudit premier paramètre sera affectée négativement, une requête secondaire est envoyée par la première cellule aux cellules adjacentes à la première cellule, qui ne sont pas voisines de la seconde cellule, pour fournir un service à des utilisateurs spécifiés de la première cellule, et, si la requête secondaire de la première cellule est acceptée, la requête de la seconde cellule est acceptée, les utilisateurs spécifiés sont transférés de la première cellule et la seconde cellule, la valeur du second paramètre de chaque cellule qui a accepté la requête secondaire est mise à jour pour réfléchir l'acceptation, et les cellules voisines de chaque cellule qui a accepté la requête secondaire et le moyen de contrôle sont informés de cette valeur mise à jour.

3. Procédé selon la revendication 2, dans lequel une autre requête secondaire est émise par chacune des n autres cellules dans le réseau cellulaire sans fil, une autre requête secondaires émise par la n-ième cellule étant une requête pour une autre cellule afin de fournir un service à des utilisateurs spécifiés de la n-ième cellule, où 1≤n≤N, N est un nombre maximum prédéterminé de cellules qui sont autorisées à émettre une telle autre requête secondaire, et la n-ième cellule a pour voisine la (n-1)-ième cellule, sauf lorsque n est 1 lorsqu'elle a pour voisine la première cellule,
une autre requête secondaire étant émise par la n-ième cellule lorsque, en fonction de la charge présente de la n-ième cellule, la valeur du premier paramètre de la n-ième cellule sera affectée négativement en acceptant une autre requête secondaire provenant de la (n-1)-ième cellule, sauf lorsque n est 1 auquel cas une autre requête secondaire est émise par la n-ième cellule lorsque, en fonction de la charge présente de la n-ième cellule, la valeur du premier paramètre de la n-ième cellule sera affectée négativement en acceptant la requête secondaire de la première cellule, où, si une autre requête secondaire de la n-ième cellule est acceptée :
la requête reçue de la (n-1)-ième cellule est acceptée et les utilisateurs spécifiés sont transférés de la (n-1)-ième cellule et de la n-ième cellule, sauf lorsque n est 1 auquel cas la requête reçue de la première cellule est acceptée et les utilisateurs spécifiés sont transmis de la première cellule et de la n-ième cellule ;
la valeur du second paramètre de la (n+1)-iême cellule, qui a accepté l'autre requête secondaire, est mise à jour pour réfléchir l'acceptation ; et
les cellules voisines de la (n+1)-ième cellule et le moyen de contrôle (20) sont informés de cette valeur de second paramètre mise à jour.

4. Procédé selon la revendication 1, 2 ou 3, comportant en outre la mise à jour de la valeur du premier paramètre d'une cellule dans le réseau cellulaire sans fil qui accepte une requête pour fournir un service à des utilisateurs spécifiés d'une autre cellule et informant le moyen de contrôle (20) de cette valeur mise à jour du premier paramètre.

5. Procédé selon la revendication 2 ou 3, ou la revendication 4 lorsqu'elle est lue comme dépendant de la revendication 2 ou 3, dans lequel, si la requête secondaire de la première cellule n'est pas acceptée, si l'acceptation ou non de la requête reçue par la première cellule est déterminée en calculant quels changements concernant les valeurs desdits premier et second paramètres de la première cellule seraient provoqués en acceptant la requête reçue par la première cellule, et la décision d'accepter ou de décliner la requête reçue par la première cellule est effectuée en fonction d'une comparaison utilisant les valeurs modifiées une pour les premier et second paramètres de la première cellule.

6. Procédé selon la revendication 5, dans lequel, afin de prendre la décision d'accepter ou de décliner la requête reçue par la première cellule en fonction de la comparaison, la proximité de la valeur modifiée du second paramètre à une valeur présélectionnée pour le second paramètre et la proximité de la valeur modifiée du premier paramètre à une valeur présélectionnée pour le premier paramètre sont déterminées.

7. Procédé selon l'une quelconque des revendications précédentes, dans lequel, lors de la détermination de fournir ou non un service aux utilisateurs spécifiés de la seconde cellule qui émet la requête, on considère la valeur présente du second paramètre de cette seconde cellule.

8. Procédé selon l'une quelconque des revendications précédentes, dans lequel, lors de la détermination de fournir un service ou non aux utilisateurs spécifiés de la seconde cellule qui émet la requête, on considère la valeur présente du second paramètre de la première cellule recevant la requête.

9. Procédé selon l'une quelconque des revendications précédentes, dans lequel la quantité de changement dans la valeur du second paramètre d'une cellule dans le réseau cellulaire sans fil effectué lorsqu'une requête est acceptée par ladite cellule, dépend de la valeur du second paramètre de ladite autre cellule provenant d'une autre cellule pour fournir un service à des utilisateurs spécifiés dans ladite autre cellule qui a effectué la requête avant l'acceptation de la requête.

10. Procédé selon l'une quelconque des revendications précédentes, dans lequel la valeur du second paramètre dans une cellule dans le réseau cellulaire sans fil est réduite lorsqu'elle émet une requête pour une autre cellule afin de fournir un service à des utilisateurs spécifiés dans la cellule, sauf lorsque cette requête est en réponse à une requête d'une autre cellule pour fournir un service dans la cellule à des utilisateurs dans ladite autre cellule.

11. Procédé selon l'une quelconque des revendications précédentes, comportant en outre un changement de la manière dont la valeur du second paramètre est mise à jour pour un résultat particulier de l'étape de détermination conformément à une requête émise par le moyen de contrôle.

12. Procédé selon l'une quelconque des revendications précédentes, dans lequel, afin d'évaluer si la valeur du premier paramètre sera affectée négativement ou non, le changement de la valeur du premier paramètre qui sera provoqué en acceptant la requête reçue est calculé, la valeur changée est comparée à une valeur présélectionnée pour le premier paramètre, et il est déterminé que la valeur du premier paramètre sera affectée négativement si la valeur changée est inférieure à la valeur présélectionnée, lorsque la valeur optimum pour le premier paramètre est plus élevée que la valeur présélectionnée, ou si la valeur changée est supérieure à la valeur présélectionnée, lorsque la valeur optimum pour le premier paramètre est inférieure à la valeur présélectionnée.

13. Appareil (10) utilisé dans une première cellule d'un réseau cellulaire sans fil, réseau cellulaire sans fil dans lequel un premier paramètre d'une cellule indique la performance opérationnelle de la cellule et possède une valeur optimum et réseau cellulaire sans fil dans lequel un second paramètre d'une cellule indique le degré d'acceptation par la cellule de transferts d'utilisateurs à la cellule par rapport au degré de requêtes par la cellule de transférer des utilisateurs depuis la cellule et possède une valeur optimum, lequel appareil (10) comporte :
un moyen de réception de requête (1) configuré pour recevoir, depuis une seconde cellule du réseau cellulaire sans fil qui est voisine de la première cellule, une requête pour fournir un service à des utilisateurs spécifiés dans la seconde cellule ;
un moyen de détermination (2) configuré pour déterminer la fourniture ou non d'un service à des utilisateurs spécifiés de la seconde cellule, quels moyens de détermination (2) permettent d'évaluer si, en fonction de la charge présente de la première cellule, une valeur du premier paramètre de la première cellule sera affectée négativement si la requête de la seconde cellule est acceptée et si des utilisateurs sont transférés depuis la seconde cellule à la première cellule ;
un moyen de réponse (3) configuré pour accepter ou décliner la requête de la seconde cellule conformément au résultat du moyen de détermination (2) ;
un moyen de mise à jour (4) configuré pour mettre à jour la valeur du second paramètre de la première cellule pour réfléchir le résultat du moyen de détermination (2) ; et
informer le moyen (5) configuré pour informer les cellules voisines de la première cellule et un moyen de contrôle (20) du réseau cellulaire sans fil, commun à une pluralité de cellules dans le réseau cellulaire sans fil comprenant la première cellule, de la valeur mise à jour du second paramètre de la première cellule.

14. Système de communication comprenant un réseau cellulaire sans fil possédant une pluralité de cellules qui sont voisines d'une autre, cellules dans lesquelles un premier paramètre d'une cellule indique la performance opérationnelle de la cellule et possède une valeur optimum et dans lesquelles un second paramètre d'une cellule indique le degré d'acceptation par la cellule de transferts d'utilisateurs à la cellule par rapport au degré de requêtes par la cellule de transférer des utilisateurs depuis la cellule et possède une valeur optimum, dans lequel chacune des cellules voisines est équipée d'un appareil (10) selon la revendication 13.

15. Programme informatique qui, lorsqu'il est exécuté sur un ordinateur, amène cet ordinateur à mettre en oeuvre le moyen d'un appareil (10) selon la revendication 13, ou amène cet ordinateur à équiper une cellule d'une partie d'un système selon la revendication 14, ou amène cet ordinateur à exécuter les étapes d'un procédé selon l'une quelconque des revendications 1 à 12.
